# EUROPÄISCHE PATENTSCHRIFT

(11) **EP 1 205 435 B1**
(45) Veröffentlichungstag und Bekanntmachung des Hinweises auf die Patenterteilung: **29.06.2005**
(21) Anmeldenummer: 01126281.3
(22) Anmeldetag: 06.11.2001
(51) Int. Cl.: C01B 17/50

(54) **Verfahren zum Herstellen von SO2 aus H2S-haltigem Gas**
Process for producing SO2 from H2S containing gases
Procédé de production de SO2 à partir de gaz contenant H2S

(30) Priorität: 08.11.2000 DE 10055343
(43) Veröffentlichungstag der Anmeldung: 15.05.2002
(73) Patentinhaber: Air Liquide Deutschland GmbH, 40235 Düsseldorf (DE)
(72) Erfinder: Gross, Gerhard, 47877 Willich (DE); Lailach, Günter, 47877 Krefeld (DE); Wassmann, Diana, 47799 Krefeld (DE)

(56) Entgegenhaltungen:
- EP-A- 0 134 594
- DE-A- 19 722 570
- US-A- 3 632 312
- PATENT ABSTRACTS OF JAPAN vol. 005, no. 106 (C-062), 10. Juli 1981 (1981-07-10) & JP 56 048229 A (SHIN MEIWA IND CO LTD), 1. Mai 1981 (1981-05-01)

## Beschreibung

Die Erfindung betrifft ein Verfahren zum Herstellen von SO₂ aus H₂S-haltigem Gas.

Beim bekannten "Claus-Verfahren" wird H₂S mit Luft in einem mehrstufigen Prozess in einer "Claus-Anlage" thermisch und katalytisch zu elementarem Schwefel umgesetzt. Es handelt sich dabei um einen hochentwickelten Prozess, der vornehmlich in der Petrolindustrie eingesetzt wird. Für eine Entsorgung kleinerer Mengen an H₂S enthaltenden Gasströmen sind Claus-Anlagen jedoch unwirtschaftlich.

Die einfache Verbrennung derartiger Gase mit Luft birgt neben dem Problem sehr hoher Flammentemperaturen vor allem das Problem, dass die Verbrennung im Normalfall nicht vollständig abläuft. H₂S-Restmengen reagieren dann mit SO₂ zu Schwefel, der sich in kälteren Anlagebereichen ablagert und außer zu Verstopfungen bei unbeabsichtigter Entzündung auch zu erheblichen Schäden führen kann.

Eine gebräuchliche Möglichkeit, kleine Mengen H₂S-haltiger Gase unter SO₂-Bildung zu entsorgen, besteht darin, sie in Röstöfen einzuleiten, in denen sulfidische Erze geröstet werden oder in Fließbettreaktoren, in denen schwefelhaltige Abfälle thermisch unter SO₂-Bildung gespalten werden.

Aufgabe der Erfindung ist es, ein einfaches und kostengünstiges Verfahren zur Verfügung zu stellen, bei dem die obengenannten Nachteile vermieden werden.

Diese Aufgabe wird ausgehend von dem eingangs genannten Verfahren erfindungsgemäß gelöst, durch Einleiten eines H₂S-haltigen Gasstroms in einen Fließbettreaktor, in welchem unter Einsatz eines sauerstoffhaltigen Fluidisierungsgases eine fluidisierte, heiße Partikelschicht erzeugt und in dem H₂S zu SO₂ und H₂O verbrannt wird, wobei der H₂S-haltige Gasstrom mittels eines Treibgases in mindestens einem Injektor verdichtet und in die Partikelschicht eingeblasen wird.

Überraschend wurde gefunden, dass H₂S vollständig zu SO₂ verbrannt werden kann, wenn der H₂S-haltige Gasstrom direkt in eine fluidisierte Partikelschicht eines Fließbettreaktors (im folgenden auch als "Wirbelschicht" bezeichnet) eingeblasen wird, die mittels eines sauerstoffhaltigen Gases als Fluidisierungsgas erzeugt wird.

Wesentlich dabei ist eine gute Verteilung des H₂S-haltigen Gases in der Wirbelschicht, um zu verhindern, dass ein Teil des H₂S-haltigen Gases in den sauerstoffarmen Gasraum oberhalb der Partikelschicht gelangt und unverbrannt den Fleißbettreaktor verlässt. Daher wird erfindungsgemäß der H₂S-haltige Gasstrom mittels eines oder mehrerer Injektoren direkt in die fluidisierte Partikelschicht des Fließbettreaktors eingeblasen. Derartige Injektoren werden mit einem Treibgas betrieben. Dadurch ist es möglich, den H₂S-haltigen Gasstrom zu verdichten und gegen den Innendruck innerhalb der Wirbelschicht mit hoher Geschwindigkeit direkt in diese einzubringen. Innerhalb der Wirbelschicht erfolgt eine gute Vermischung mit dem sauerstoffhaltigen Fluidisierungsgas, so dass durch das Einbringen des H₂S-haltigen Gasstroms in die Wirbelschicht ein hoher Umsetzungsgrad erreicht wird.

Zur Verbrennung von H₂S ist es erforderlich, dass ein sauerstoffhaltiges Gas in die mindestens 400°C heiße Partikelschicht eingeleitet wird, wobei Sauerstoff mit H₂S unter Bildung von SO₂ reagiert. Im einfachsten Fall wird als Fluidisierungsgas Luft oder sauerstoffangereicherte Luft eingesetzt. Der Sauerstoffgehalt nimmt beim Durchströmen der Wirbelschicht infolge von Oxidationsreaktionen von unten nach oben ab. Da somit innerhalb der Wirbelschicht eine höhere Sauerstoffkonzentration vorliegt als oberhalb der Wirbelschicht, bewirkt das Einleiten des zu oxidierenden Schwefelwasserstoffs (H₂S) in die Wirbelschicht eine Vermischung mit vergleichsweise sauerstoffreichem Gas und damit eine beschleunigte Reaktion und einen höheren Umsetzungsgrad.

Um eine ausreichend hohe Reaktionsgeschwindigkeit zu erreichen, wird die Temperatur der Partikelschicht auf mindestens 400°C eingestellt. Vorzugsweise wird die Temperatur der Partikelschicht jedoch zwischen 800 und 1200°C eingestellt. Dadurch wird eine hohe Reaktionsgeschwindigkeit und damit ein möglichst hoher Umsetzungsgrad gewährleistet.

Der Sauerstoffgehalt nimmt beim Durchströmen der Wirbelschicht infolge von Oxidationsreaktionen ab, bis er eine für die Reaktionsgas-Atmosphäre oberhalb der fluidisierten Partikelschicht typische Sauerstoffkonzentration erreicht. Es hat sich als günstig erweisen, in diesem Freiraum eine Reaktionsgas-Atmosphäre mit einer Sauerstoffkonzentration im Bereich von 0,1 bis 3 Vol.-% einzustellen. Der Ausdruck Reaktionsgas-Atmosphäre besagt in diesem Zusammenhang, dass sich die angegebene Sauerstoffkonzentration im Freiraum infolge einer innerhalb der Partikelschicht ablaufenden chemischen Reaktion einstellt; ein Einleiten eines sauerstoffhaltigen Gasstroms in den Freiraum ist hierfür nicht erforderlich. Bei einem Sauerstoffgehalt oberhalb der angegebenen Obergrenze von 3 Vol.-% besteht die Gefahr einer unerwünschten Oxidation von SO₂ zu SO₃.

Bevorzugt wird der Sauerstoffgehalt in der Reaktionsgas-Atmosphäre zwischen 0,5 und 1 Vol.-% Sauerstoff eingestellt. Die Untergrenze ergibt sich als Maß für einen Mindest-Sauerstoffgehalt in der Partikelschicht, der zu einer ausreichend schnellen und möglichst vollständigen Umsetzung des eingeleiteten H₂S-Gases führt.

Es hat sich besonders bewährt, den H₂S-haltigen Gasstrom in einem Bereich von 0,1 m bis 0,5 m über einem Anströmboden des Fließbettreaktors in die fluidisierte Partikelschicht einzublasen. Durch ein Einblasen des H₂S-haltigen Gasstroms in den unteren Bereich der fluidisierten Partikelschicht wird einerseits ein ausreichend langer Strömungsweg und damit einhergehend eine ausreichende Reaktionsdauer für die Umsetzung von H₂S innerhalb der Partikelschicht gewährleistet, und andererseits wird durch die erhöhte Sauerstoffkonzentration im unteren Teil der Wirbelschicht ein höherer Umsetzungsgrad erreicht.

Als Treibgas für den mindestens einen Injektor werden bevorzugt Wasserdampf, Stickstoff und/oder Kohlendioxid verwendet. Diese Gase zeichnen sich dadurch aus, dass sie nicht mit H₂S regieren. Anstelle von Stickstoff kann auch komprimierte Luft eingesetzt werden.

Besonders bewährt hat sich der Einsatz eines Injektors, mittels dessen der H₂S-haltige Gasstrom mit Überschallgeschwindigkeit in die fluidisierte Partikelschicht eingeblasen wird. Dadurch wird eine besonders homogene Durchmischung und damit einhergehend ein besonders hoher Umsetzungsgrad erreicht. Ein Einblasen des H₂S-haltigen Gasstroms mit Überschallgeschwindigkeit wird durch eine sogenannte Laval-Düse ermöglicht.

Zweckmäßigerweise wird ein Fließbettreaktor eingesetzt, in welchem gleichzeitig eine thermische Spaltung von Metallsulfaten und/oder Schwefelsäure erfolgt. Bei dieser Ausgestaltung des erfindungsgemäßen Verfahrens kann die Wärme der H₂S-Verbrennung unmittelbar für die endotherme Spaltreaktion genutzt werden. Demgegenüber kann diese Wärme bei einer H₂S-Einleitung oberhalb der fluidisierten Partikelschicht (wie bei dem gattungsgemäßen Verfahren) lediglich zur Erzeugung von Abhitzedampf genutzt werden. Bevorzugt kann zur Durchführung des erfindungsgemäßen Verfahrens auch ein Fließbettreaktor zum Rösten sulfidischer Erze, insbesondere von Pyrit oder Zinkblende eingesetzt. Dabei wird das bei der Verbrennung von H₂S erzeugte SO₂ gemeinsam mit dem aus der Erzröstung oder Abfallspaltung erzeugten SO₂ weiterverarbeitet.

Nachfolgend wird die Erfindung anhand von Ausführungsbeispielen und einer Zeichnung näher erläutert. In der Zeichnung zeigen in schematischer Darstellung im einzelnen:
- **Figur 1**: einen zur Durchführung des erfindungsgemäßen Verfahrens geeigneten stationären Fließbettreaktor, wie er zum Rösten sulfidischer Erze eingesetzt wird, und
- **Figur 2**: einen zur Durchführung des erfindungsgemäßen Verfahrens geeigneten Injektor.

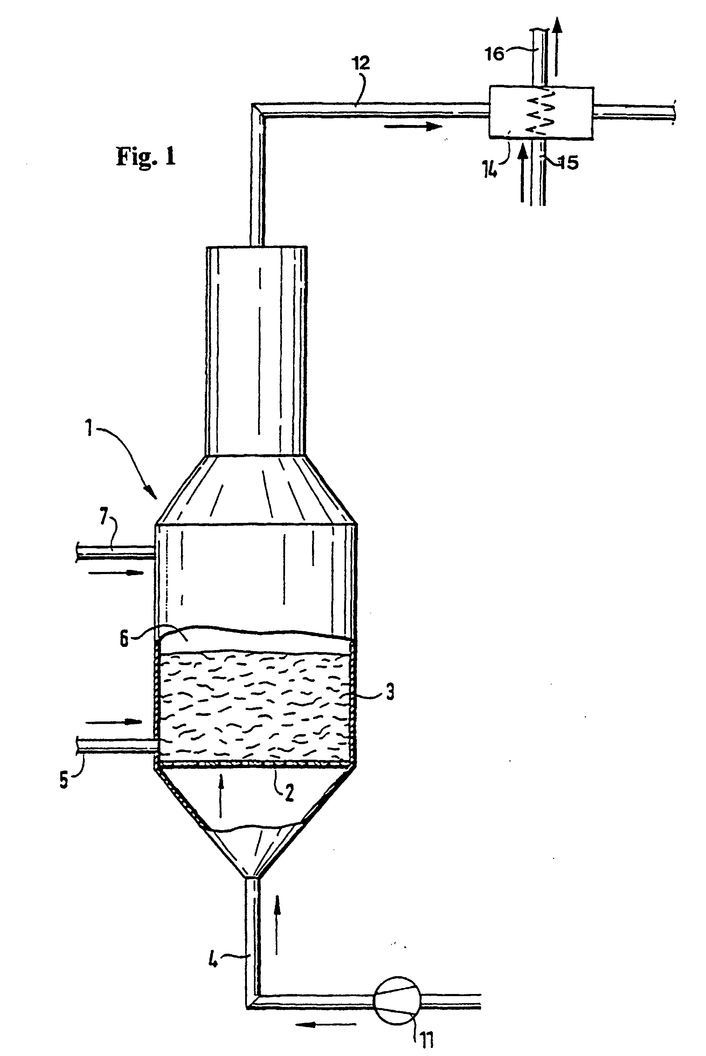

Bei dem in **Figur 1** dargestellten Fließbettreaktor 1 zum Rösten sulfidischer Erze ist im unteren Bereich ein Anströmboden 2 vorgesehen, über dem eine Wirbelschicht 3 aus erzhaltiger Körnung erzeugt wird, indem von unten ein mittels Gebläse 11 erzeugter Luftstrom 4 durch den Anströmboden 2 eingeblasen wird. Der Luftstrom dient gleichzeitig als Verbrennungs- und als Fluidisierungsgas. Der Durchmesser des Fließbeäreaktors 1 beträgt 4,5 m.

Über der Wirbelschicht 3 ist ein Freiraum 6 vorgesehen, über den SO₂-haltiges Reaktionsgas 12 über einen Abhitzekessel 14 abgezogen und zur Erzeugung von Dampf 16 aus entsalztem Wasser 15 genutzt wird. Der so erzeugte Dampf wird als Treibgas für die H₂S-Injektion verwendet, so dass sich daraus eine Energieeinsparung ergibt (ergänzend oder alternativ dazu kann der Dampf auch zur Erzeugung von Elektroenergie genutzt werden). Über einen Zulauf 7 im Freiraum 6 wird dem Fließbettreaktor 1 kontinuierlich die erzhaltige Körnung zugeführt.

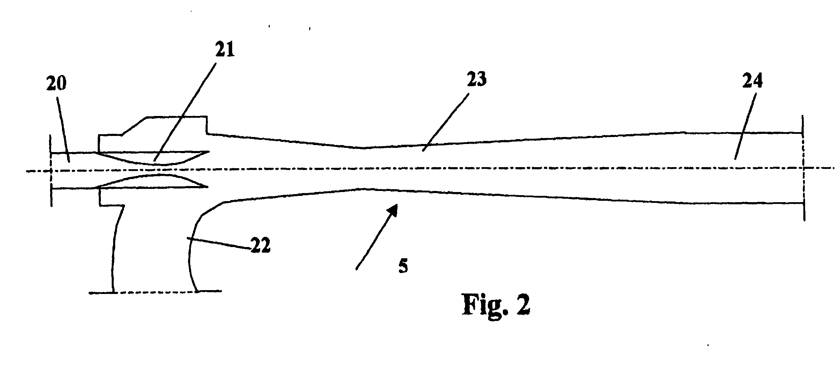

Etwa 0,2 m oberhalb des Anströmbodens 2 sind in der Seitenwand des Reaktors 1 drei, über den Reaktorumfang gleichmäßig verteilte Gasinjektoren 5 montiert, wobei in Figur 1 nur die Ausströmleitung (siehe Figur 2, Bezugsziffer 24) eines dieser Gasinjektoren dargestellt ist. Mittels der Gasinjektoren 5 wird ein H₂S-haltiger Gasstrom unmittelbar in die Wirbelschicht 3 eingeblasen. Als Treibgas für die Gasinjektoren 5 wird Stickstoff (siehe unten, Beispiel 2) oder Luft (siehe unten, Beispiel 3) verwendet.

**Figur 2** zeigt einen zur Durchführung des erfindungsgemäßen Verfahrens geeigneten Gasinjektor 5, der auch unter der Bezeichnung "Strahlpumpe" bekannt ist. Der Gasinjektor weist eine Zuleitung 20 für ein Treibgas, eine Treibgasdüse 21, eine Saugaszuleitung 22, durch welche das H₂S-haltige Gas angesaugt wird ("Sauggas") und einen Diffusor 23, in dem das Sauggas-Treibgas-Gemisch beschleunigt, verdichtet und somit auf einen erhöhten Druck gebracht wird. Über die Ausströmleitung 24 ist der Gasinjektor 5 an der Reaktorwand angeflanscht.

Nachfolgend wird das erfindungsgemäße Verfahren anhand von Ausführungsbeispielen und anhand des in den Figuren 1 und 2 schematisch dargestellten Fließbettreaktors 1 bzw. des Gasinjektors 5 näher erläutert (die Volumenangaben für Gase beziehen sich auf Normaldruck und temperatur).

### Beispiel 1 (Vergleichsbeispiel)

Für die Durchführung des Verfahrens wird ein Fließbettreaktor gemäß Figur 1, allerdings ohne die dort gezeigten Gasinjektoren 5, eingesetzt.

In dem Fließbettreaktor 1 werden 12 t/h schwefelsäurehaltige Metallsulfate unter Einsatz von Pyrit und Koks als Energieträger bei 950°C (gemessen in der Wirbelschicht 3) unter Bildung von Eisenoxid thermisch gespalten. Die durch Einblasen von 25000 m³/h Luft 4 durch den Anströmboden 2 fluidisierte Wirbelschicht 3 aus Rohstoff- und Eisenoxidpartikeln hat eine Höhe von ca. 1,2 m.

Die Reaktionsgase über der Wirbelschicht 3 enthalten ca. 14 Vol.-% SO₂ und 1 Vol.-% O₂ (bezogen auf trockenes Gas). Im Freiraum 6 über der Wirbelschicht 3 wird ein geringer Unterdruck von 10 bis 20 mbar aufrecht erhalten.

In den Fließbettreaktor 1 werden oberhalb der Wirbelschicht 3, in einer Höhe von 1,4 m über dem Anströmboden (2) 500 m³/h H₂S-Gas drucklos durch einen Einlassstutzen eingeleitet werden. Dabei wird der Volumenstrom der Fluidisierungsluft 4 auf 28000 m³/h erhöht, so dass der Sauerstoffgehalt der aus dem Reaktor austretenden Reaktionsgase 12 bei 1 Vol-% gehalten wird, um die Einstellung einer reduzierenden Atmosphäre über der Partikelschicht zu verhindern.

Infolge der zuletzt genannten Maßnahme steigt der Anfall an Abhitzedampf (bei einem Druck von 30 bar) um 3,5 t/h an. Außerdem müssen bei dieser Verfahrensweise Ablagerungen von Schwefel im Gaskühl- und -reinigungstrakt der Anlage regelmäßig entfernt werden.

### Beispiel 2

Für die Durchführung des Verfahrens wird ein Fließbettreaktor 1 eingesetzt, wie ihn die Figur 1 zeigt. Etwa 0,2 m oberhalb des Anströmbodens sind drei Bohrungen in die Seitenwand eingebracht, an die die Gasinjektoren 5 angeschlossen werden. Im Bereich der Bohrungen beträgt der Innendruck innerhalb der Wirbelschicht 3 175 mbar Überdruck. An die Sauggasleitung 22 (siehe Figur 2) der Gasinjektoren 5 wird eine H₂S-Leitung über eine Verteilerringleitung angeschlossen. Über eine Messblende werden 130 m³/h N₂ in die Treibgasringleitung, in der ein Druck von 14 bar gemessen wird, zu den Treibgaszuleitungen 20 der Gasinjektoren 5 dosiert. Mittels dieses Treibgases werden 500 m³/h H₂S-Gas aus der drucklosen H₂S-Gaszuleitung abgezogen und über die Diffusoren 23 und die Ausströmleitungen 24 der Gasinjektoren 5 mit hoher Geschwindigkeit in die fluidisierte Partikelschicht eingespeist. Um eine übermäßige Temperaturerhöhung in der Wirbelschicht 3 infolge der H₂S-Injektion zu vermeiden, wird die Koksdosierung um 450 kg/h reduziert, während Metallsulfate und Pyrit analog Beispiel 1 dosiert werden. Die Fluidisierungsluftzufuhr wird unverändert bei 25000 m³/h gehalten.

Die Reaktionsgase über der Wirbelschicht 3 enthalten ca. 15,5 Vol.-% SO₂ und 1 Vol.-% O₂ (bezogen auf trockenes Gas). Im Freiraum 6 über der Wirbelschicht 3 wird ein geringer Unterdruck von 10 bis 20 mbar aufrecht erhalten (wie in Beispiel 1).

Bei dieser Verfahrensweise werden keine Schwefelablagerungen in der Anlage beobachtet.

### Beispiel 3

In die Ausströmleitungen 24 der Gasinjektoren 5 werden Laval-Düsen 21 eingesetzt, wodurch eine Überschallinjektion der Gase in die Wirbelschicht 3 ermöglicht wird. Der H₂S-Gasstrom (Strömungsmenge: 500 m³/h) wird mittels auf 25 bar verdichteter Luft (Strömungsmenge: 1500m³/h auf 3 bar (Absolutdruck) verdichtet und durch die Laval-Düsen in die Wirbelschicht eingeblasen. Die Austrittsgeschwindigkeit des H₂S-Luft-Gemisches an den Laval-Düsen beträgt Mach 1,3, wodurch eine besonders gute Verteilung der Gase in der Wirbelschicht 3 gewährleistet ist.

Die Feststoffdosierung in den Fließbettreaktor 1 ist die gleiche wie in Beispiel 2.

Bei einer auf 23500 m³/h reduzierten Fluidisierungsluftmenge enthalten die Reaktionsgase über der Wirbelschicht 3 ca. 15,5 Vol.-% SO₂ und 1 Vol.-% O₂ (bezogen auf trockenes Gas). Im Freiraum 6 über der Wirbelschicht 3 wird ein geringer Unterdruck von 10 bis 20 mbar aufrecht erhalten.

## Patentansprüche

1. Verfahren zum Herstellen von SO₂ aus H₂S-haltigem Gas durch Einleiten eines H₂S-haltigen Gasstroms in einen Fließbettreaktor, in welchem unter Einsatz eines sauerstoffhaltigen Fluidisierungsgases eine fluidisierte, mindestens 400°C heiße Partikelschicht erzeugt und in dem H₂S zu SO₂ und H₂O verbrannt wird, wobei der H₂S-haltige Gasstrom mittels eines Treibgases in mindestens einem Injektor (5) verdichtet und in die Partikelschicht (3) eingeblasen wird.

2. Verfahren nach Anspruch 1, **dadurch gekennzeichnet, dass** die Temperatur der Partikelschicht (3) zwischen 800 und 1200°C eingestellt wird.

3. Verfahren nach Anspruch 1 oder 2, **dadurch gekennzeichnet, dass** in einem Freiraum (6) oberhalb der fluidisierten Partikelschicht (3) eine Reaktionsgas-Atmosphäre mit einer Sauerstoffkonzentration im Bereich von 0,1 bis 3 Vol.-% eingestellt wird.

4. Verfahren nach Anspruch 3, **dadurch gekennzeichnet, dass** die Reaktionsgas-Atmosphäre zwischen 0,5 und 1 Vol.-% Sauerstoff enthält.

5. Verfahren nach einem der Ansprüche 1 bis 4, **dadurch gekennzeichnet, dass** der H₂S-haltige Gasstrom in einem Bereich von 0,1 m bis 0,5 m über einem Anströmboden (2) des Fließbettreaktors (1) in die fluidisierte Partikelschicht (3) eingeblasen werden.

6. Verfahren nach einem der Ansprüche 1 bis 5, **dadurch gekennzeichnet, dass** als Treibgas für den mindestens einen Injektor (5) Wasserdampf, Stickstoff oder Kohlendioxid verwendet wird.

7. Verfahren nach einem der Ansprüche 1 bis 6, **dadurch gekennzeichnet, dass** ein Injektor (5) eingesetzt wird, mittels dessen der H₂S-haltige Gasstrom mit Überschallgeschwindigkeit in die fluidisierte Partikelschicht (3) eingeblasen wird.

8. Verfahren nach einem der Ansprüche 1 bis 7, **dadurch gekennzeichnet, dass** im Fließbettreaktor (1) gleichzeitig eine thermische Spaltung von Metallsulfaten und/oder Schwefelsäure erfolgt.

## Claims

1. Process for producing SO₂ from H₂S-containing gas by introducing an H₂S-containing gas stream into a fluidized-bed reactor, in which a fluidized layer of particles at a temperature of at least 400°C is generated using an oxygen-containing fluidizing gas and in which H₂S is burnt to form SO₂ and H₂O, the H₂S-contianing gas stream being compressed in at least one injector (5) and blown into the layer of particles (3) by means of a blowing gas.

2. Process according to Claim 1, **characterized in that** the temperature of the layer of particles (3) is set to between 800 and 1200°C.

3. Process according to Claim 1 or 2, **characterized in that** a reaction gas atmosphere with an oxygen concentration in the range from 0.1 to 3% by volume is set in a free space (6) above the fluidized layer of particles (3).

4. Process according to Claim 3, **characterized in that** the reaction gas atmosphere contains between 0.5 and 1% by volume of oxygen.

5. Process according to one of Claims 1 to 4,
**characterized in that** the H₂S-containing gas stream is blown into the fluidized layer of particles (3) in a region from 0.1 m to 0.5 m above an inflow (2) of the fluidized-bed reactor (1).

6. Process according to one of Claims 1 to 5,
**characterized in that** water vapour, nitrogen or carbon dioxide is used as blowing gas for the at least one injector (5).

7. Process according to one of Claims 1 to 6,
**characterized in that** an injector (5) by means of which the H₂S-containing gas stream is blown into the fluidized layer of particles (3) at supersonic velocity is used.

8. Process according to one of Claims 1 to 7,
**characterized in that** thermal decomposition of metal sulphates and/or sulphuric acid takes place at the same time in the fluidized-bed reactor (1).

## Revendications

1. Procédé pour la préparation de SO₂ à partir de gaz contenant du H₂S par introduction d'un flux gazeux contenant du H₂S dans un réacteur à lit fluidisé dans lequel est produit, avec utilisation d'un gaz de fluidisation contenant de l'oxygène, une couche de particules fluidisées, chaudes d'au moins 400°C et dans lequel le H₂S est brûlé en SO₂ et H₂O, le flux gazeux contenant le H₂S étant comprimé au moyen d'un gaz propulseur dans au moins un injecteur (5) et insufflé dans la couche de particules (3).

2. Procédé selon la revendication 1, **caractérisé en ce que** la température de la couche de particules (3) est réglée entre 800 et 1200°C.

3. Procédé selon la revendication 1 ou 2, **caractérisé en ce qu'**on règle, dans un espace libre (6) au-dessus de la couche de particules (3) fluidisées une atmosphère de gaz de réaction présentant une concentration en oxygène dans la plage de 0,1 à 3% en volume.

4. Procédé selon la revendication 3, **caractérisé en ce que** l'atmosphère de gaz de réaction contient entre 0,5 et 1% en volume d'oxygène.

5. Procédé selon l'une quelconque des revendications 1 à 4, **caractérisé en ce que** le flux gazeux contenant du H₂S est insufflé dans la couche de particules fluidisées (3) dans une zone de 0,1 m à 0,5 m via un fond de soufflage (2) du réacteur à lit fluidisé (1).

6. Procédé selon l'une quelconque des revendications 1 à 5, **caractérisé en ce qu'**on utilise comme gaz propulseur pour ledit au moins un injecteur (5) de la vapeur d'eau, de l'azote ou du dioxyde de carbone.

7. Procédé selon l'une quelconque des revendications 1 à 6, **caractérisé en ce qu'**on utilise un injecteur (5) au moyen duquel le flux gazeux contenant du H₂S est insufflé dans la couche de particules (3) fluidisées à la vitesse supersonique.

8. Procédé selon l'une quelconque des revendications 1 à 7, **caractérisé en ce qu'**il se produit simultanément dans le réacteur à lit fluidisé (1) une dissociation thermique des sulfates métalliques et/ou d'acide sulfurique.
